# EUROPEAN PATENT APPLICATION

(11) **EP 1 852 321 A1**
(43) Date of publication of application: **07.11.2007**
(21) Application number: 05781259.6
(22) Date of filing: 20.07.2005
(51) Int. Cl.: B60S 1/50

(54) **MOTOR VEHICLE WINDSCREEN WASHER**

(30) Priority: 17.02.2005 RU 2005104291
(71) Applicant: Petrunya, Igor Eduardovich, Moscow 113216 (RU)
(72) Inventor: Petrunya, Igor Eduardovich, Moscow 113216 (RU)
(74) Representative: Benatov, Emil Gabriel
(86) International application number: PCT/RU2005/000383
(87) International publication number: WO 2006/088389

(57) **Abstract**

The invention relates to a device of vehicles, in particular, to means for supplying liquid to clean windscreens, windows or optical devices.

The essence of the invention: the automobile windscreen washer contains a reservoir for washing liquid having a neck with a cover and a means for securing the reservoir to the body of the automobile and is provided with a hatch with a cover receiving the neck, wherein the hatch is disposed in the front mudguard of the body of the automobile with access to the neck from the outside of the body.

## Description

### FIELD OF THE INVENTION

The invention relates to a technical device of vehicles, in particular, to means for supplying liquid to clean windscreens, windows or optical devices.

### BACKGROUND OF THE INVENTION

Washers of vehicle windscreen are known comprising a reservoir for washing liquid having a neck with a cover and means for securing the reservoir (see, SU 1551571, B60 S 1/48, 1990).

The closest to the claimed subject matter is a washer as a device for removing ice from the windscreen of an automobile comprising a reservoir for a washing liquid having a neck with a cover and a means for securing the reservoir to the body of the car (RU No.2228864, Cl. B 60 S 1/48, 2004).

A disadvantage of such known technical solution is placing the reservoir with the neck inside the motor compartment covered by the hood. This circumstance creates inconvenience in servicing conditioned by the possibility of touching the dirty surfaces of the car and accidental injury as a result of contacting heated aggregates.

### SUMMARY OF THE INVENTION

The technical result attainable in implementing the claimed invention consists in providing a convenient and safe in servicing means for washing windows and optical devices of the automobile.

The above technical result is achieved by a washer of the car windscreen containing a reservoir having a neck with a cover and a means for securing the reservoir to the body of the automobile due to the fact that it is provided with a hatch with a cover receiving the neck, wherein the hatch is disposed in the front mudguard of the body of the car with access to the neck from the outside of the body. As well as due to the fact that the neck is connected to the reservoir by means of a hose.

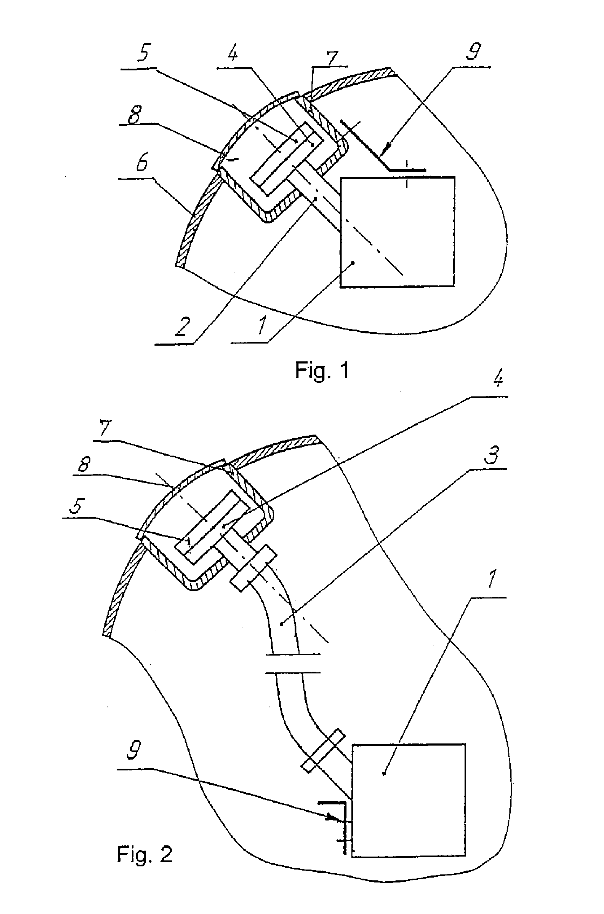

The essence of the claimed technical solution is explained by a drawing where Fig.1 schematically shows a general view of the device, while Fig.2 schematically shows a general view of the device with the hose.

The washer of the windscreen contains reservoir 1 for a washing liquid. The neck 4 covered by removable cover 5 is coupled with reservoir 1 by means of socket 2 or hose 3. Reservoir 1 can be secured, for example in the front of the mudguard 6 of the car body with the access to the neck 4 from the outside of the body, wherein the front mudguard 6 of the car body is provided with an outer hatch 7 having a cover 8. Neck 4 with its cover 5 is positioned within the outer hatch 7. When the reservoir 1 is connected to the neck 4 by means of socket 2, reservoir 1 is secured in the front mudguard 6 of body of the automobile by securing means 9 (for example, by bolts) in the area, for example, adjoining the location of the hatch. When reservoir 1 is connected to the neck 4 by means of the hose 3, reservoir 1 can be installed and secured, for example, in the motor compartment (not shown) of the automobile by securing means 9.

Filling of the washing liquid is made through the neck 4 with removed cover 5 when the cover 8 of the hatch 7 is open without contact with dirty surfaces and heated aggregates.

## Claims

1. A washer of automobile windscreen containing a reservoir for a washing liquid having a neck with a cover and a means for securing the reservoir to the body of the automobile, **characterized in that** it is provided with a hatch with a cover receiving the neck, wherein the hatch is disposed in the front mudguard of the automobile body with access to the neck from the outside of the body.

2. The washer according to claim 1, **characterized in that** the neck is connected with the reservoir by means of a hose.
